# EUROPÄISCHE PATENTSCHRIFT

(11) **EP 3 163 107 B1**
(45) Veröffentlichungstag und Bekanntmachung des Hinweises auf die Patenterteilung: **05.01.2022**
(21) Anmeldenummer: 16195694.1
(22) Anmeldetag: 26.10.2016
(51) Int. Cl.: F16D 3/06, F16D 3/20, F16D 1/10, F16D 1/12, F16D 3/18, F16C 3/03, F16D 3/16

(54) **GELENKWELLE**
ARTICULATED SHAFT
ARBRE DE TRANSMISSION

(30) Priorität: 27.10.2015 DE 102015118259
(43) Veröffentlichungstag der Anmeldung: 03.05.2017
(73) Patentinhaber: Josef Hohn GmbH, 86368 Gersthofen (DE)
(72) Erfinder: HOHN, Jörg Josef Oliver, 86559 Adelzhausen (DE)
(74) Vertreter: Daub, Thomas

(56) Entgegenhaltungen:
- EP-A1- 1 683 703
- DE-A1- 3 326 990
- DE-A1- 19 611 000
- DE-A1- 19 709 282
- DE-A1- 19 715 744
- DE-U- 1 831 448
- DE-U1- 20 000 368
- JP-A- 2002 264 825
- US-A- 5 903 965

## Beschreibung

### Stand der Technik

Die Erfindung betrifft eine Gelenkwelle nach Anspruch 1.

Es sind bereits Gelenkwellen mit einem Längenausgleich bekannt, welche eine mit einem Rohr verschweißte profilverzahnte Nabe, insbesondere eine Keilwellennabe, aufweisen. Ferner weisen die Gelenkwellen zumindest ein Kardangelenk auf, an welchem eine profilverzahnte Vollwelle, insbesondere eine Keilwelle, verbunden ist. Die profilverzahnte Vollwelle ist zum Längenausgleich axial zu der profilverzahnten Nabe verschiebbar. Nachteilig an den bekannten Gelenkwellen sind ein hohes Gesamtgewicht und ein hoher Montage- und/oder Herstellungsaufwand.

Aus der Deutschen Gebrauchsmusterschrift DE 200 00 368 U1 ist bereits eine Gelenkwelle zur Übertragung von Drehmomenten bekannt, mit einem Wellenrohr, an dem endseitig Gelenke angeordnet sind, wobei das Wellenrohr aus wenigstens zwei teleskopisch ineinandergesteckten Wellenrohrabschnitten besteht, die über komplementäre, gezogene Schiebeprofile drehfest miteinander gekoppelt sind, wobei die Gelenke als Kugelgleichlaufgelenke ausgebildet sind, wobei die äußeren Gelenkkörper mit dem Wellenrohr verbunden sind, und wobei die Schiebeprofile als gezogene Schiebeverzahnungen ausgebildet sind.

Aus der DE 197 09 282 A1 ist bereits eine Gelenkwelle mit einer Nabe und mit einem Rohr, welches ein Außenprofil aufweist, über welches das Rohr mit einem Innenprofil der Nabe verbunden ist, und mit einem Profilschutz mit einer rohrförmigen Dichthülse, sowie einem Dichtelement, welches zwischen der rohrförmigen Dichthülse und der Nabe angeordnet ist, bekannt.

Die Aufgabe der Erfindung besteht insbesondere darin, eine gattungsgemäße Gelenkwelle mit vorteilhaften Eigenschaften hinsichtlich eines Gesamtgewichts und eines Montage- und/oder Herstellungsaufwand bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Gelenkwelle vorgeschlagen, insbesondere eine Kardanwelle, mit zumindest einem Kardangelenk, mit zumindest einer mit dem Kardangelenk verbundenen Nabe und mit zumindest einem Rohr, welches ein zu einem Innenprofil der Nabe korrespondierendes Außenprofil aufweist, das zu einer Drehmomentübertragung zwischen dem Rohr und der Nabe vorgesehen ist.

Unter einer "Gelenkwelle" soll insbesondere eine Welle mit zumindest einem Gelenk, insbesondere einem Kardangelenk und/oder Kreuzgelenk und/oder einer Gelenkscheibe und/oder einer anderen geeigneten Gelenkform, verstanden werden, welche insbesondere dazu vorgesehen ist, zumindest eine Drehbewegung und/oder zumindest ein Drehmoment zwischen nicht fluchtenden Drehachsen und/oder zwischen relativ zueinander beweglichen Maschinenelementen zu übertragen. Unter einem "Kardangelenk" soll in diesem Zusammenhang insbesondere ein Gelenk verstanden werden, welches dazu vorgesehen ist, zwei nicht fluchtende Wellen miteinander zu verbinden, wobei ein Beugewinkel des Kardangelenks während einer Drehmomentübertragung veränderbar ist. Unter einer "Nabe" soll insbesondere ein Element verstanden werden, welches dazu vorgesehen ist, auf eine Welle und/oder eine Achse geschoben und/oder auf einer Welle und/oder einer Achse befestigt zu werden. Insbesondere ist die Nabe dazu vorgesehen, eine Welle und/oder eine Achse mit zumindest einem weiteren Maschinenelement zu verbinden.

Unter einem "Rohr" soll in diesem Zusammenhang ein zumindest im Wesentlichen rohrförmiges Element verstanden werden, welches dazu vorgesehen ist, wirkschlüssig mit der Nabe verbunden zu werden. Insbesondere ist das Rohr dazu vorgesehen, eine Drehbewegung und/oder ein Drehmoment auf die Nabe zu übertragen und/oder eine Drehbewegung und/oder ein Drehmoment von der Nabe aufzunehmen. Unter einem "rohrförmigen Element" soll in diesem Zusammenhang insbesondere ein länglicher Hohlkörper verstanden werden, dessen Länge um ein Vielfaches größer ist als sein Durchmesser. Das Rohr ist insbesondere als ein Hohlzylinder ausgebildet, welcher insbesondere eine zumindest im Wesentlichen regelmäßig polygonalen Grundfläche, beispielsweise einer quadratischen oder sechseckigen Grundfläche, und vorzugsweise eine zumindest im Wesentlichen kreisförmigen Grundfläche aufweist. Darunter, dass das Rohr "ein zu einem Innenprofil der Nabe korrespondierendes Außenprofil aufweist", soll insbesondere verstanden werden, dass das Rohr, insbesondere in einem Endbereich, ein Außenprofil aufweist, welches dazu vorgesehen ist, insbesondere zu einer Drehmomentübertragung formschlüssig in das Innenprofil einzugreifen. Insbesondere ist das Außenprofil insbesondere unmittelbar von einer Wandung des Rohrs gebildet.

Durch eine derartige Ausgestaltung kann eine gattungsgemäße Gelenkwelle mit vorteilhaften Eigenschaften hinsichtlich eines Gesamtgewichts und eines Montage- und/oder Herstellungsaufwands bereitgestellt werden. Insbesondere kann das Außenprofil aufweisende Rohr unmittelbar in die mit dem Kardangelenk verbundenen Nabe, welche ein Innenprofil aufweist, eingeführt werden. Hierdurch kann insbesondere ein Anschweißen einer profilverzahnten Nabe an das Rohr entfallen, wodurch ein Gewicht der Gelenkwelle und/oder ein Montageaufwand und/oder Herstellungsaufwand vorteilhaft reduziert werden können. Ferner entfällt vorteilhaft die Notwendigkeit einer profilverzahnten Vollwelle oder Hohlwelle, welche mit einem Kardangelenk verbunden ist, wodurch ein Gesamtgewicht der Gelenkwelle weiter reduziert werden kann.

Ferner wird vorgeschlagen, dass die Nabe als eine Profilnabe ausgebildet ist. Unter einer "Profilnabe" soll in diesem Zusammenhang insbesondere eine Nabe, insbesondere eine Keilnabe und/oder Zahnnabe, verstanden werden, deren Innenprofil in Umfangsrichtung eine Vielzahl von Mitnehmern aufweist. Die Mitnehmer können insbesondere keilförmig, zahnförmig und/oder evolventenförmig ausgebildet sein. Insbesondere weist ein Außenprofil des Rohrs in Umfangsrichtung eine Vielzahl von Mitnehmern auf, welche zu den Mitnehmern der Profilnabe korrespondierend ausgebildet sind. Hierdurch kann eine vorteilhafte Drehmomentübertragung zwischen der Nabe und dem Rohr erreicht werden.

Des Weiteren wird vorgeschlagen, dass die Nabe und das Rohr mittels einer Passverzahnung, insbesondere mittels einer Passverzahnung mit Evolvenflanken, mit Keilflanken und/oder mit Kerbflanken, miteinander verbunden sind. Unter einer "Passverzahnung" soll insbesondere eine Formgebung in einer Welle-Nabe-Verbindung verstanden werden. Insbesondere ist die Passverzahnung als eine Vielfach-Mitnehmerverbindung ausgebildet. Eine Drehmomentübertragung erfolgt insbesondere über Zahnflanken der Passverzahnung. Die Drehachsen der Bauteile der Passverzahnung sind zumindest im Wesentlichen geometrisch identisch. Hierdurch kann eine vorteilhafte Drehmomentübertragung zwischen der Nabe und dem Rohr erreicht werden.

Zudem wird vorgeschlagen, dass das Kardangelenk und das Rohr entlang einer Axialrichtung relativ zueinander verschiebbar sind. Insbesondere sind das Kardangelenk und das Rohr entlang einer gemeinsamen Drehachse relativ zueinander verschiebbar. Eine maximale Verschiebelänge des Kardangelenks und des Rohrs relativ zueinander entspricht insbesondere zumindest 30 %, vorzugsweise zumindest 50 % und besonders bevorzugt zumindest 75 % einer Länge der Nabe, insbesondere einer Länge eines Innenprofils der Nabe. Hierdurch kann vorteilhaft ein Längenausgleich realisiert werden.

Die Gelenkwelle weist erfindungsgemäß zumindest einen Profilschutz auf, welcher dazu vorgesehen ist, einen Bereich zwischen dem Innenprofil und dem Außenprofil zu schützen, und welcher an dem Rohr angeordnet ist. Insbesondere ist der Profilschutz dazu vorgesehen, ein Eindringen von Schmutz und/oder Feuchtigkeit in einen Verbindungsbereich zwischen der Nabe und dem Rohr zumindest weitgehend zu verhindern. Der Profilschutz weist erfindungsgemäß eine zumindest im Wesentlichen rohrförmige Dichthülse auf, welche dazu vorgesehen ist, zumindest einen Verbindungsbereich zwischen der Nabe und dem Rohr in Umfangsrichtung vollständig zu umschließen. Der Profilschutz weist erfindungsgemäß zumindest im Wesentlichen ringförmige Dichtelemente auf, welche zwischen der Dichthülse und der Nabe und zwischen der Dichthülse und dem Rohr angeordnet sind. Insbesondere ist der Profilschutz unverschiebbar an dem Rohr befestigt. Hierdurch kann ein vorteilhaft zuverlässiger und/oder dauerhafter Schutz vor einem Eindringen von Schmutz und/oder Feuchtigkeit in einen Verbindungsbereich zwischen der Nabe und dem Rohr erreicht werden.

In einer bevorzugten Ausgestaltung der Erfindung wird vorgeschlagen, dass der Profilschutz zumindest im Wesentlichen von einem insbesondere schlagfesten Kunststoff gebildet ist. Insbesondere ist eine Dichthülse des Profilschutzes von einem Kunststoff gebildet. Hierdurch kann eine vorteilhafte Gewichtsreduktion erreicht werden.

Ferner wird vorgeschlagen, dass die Gelenkwelle ein weiteres Kardangelenk aufweist, an welchem eine weitere Nabe angeordnet ist. Insbesondere ist das weitere Kardangelenk an einem dem Kardangelenk gegenüberliegenden Ende des Rohrs angeordnet. Die weitere Nabe weist insbesondere ein zu der Nabe zumindest weitgehend identisches Innenprofil auf. Hierdurch kann eine vorteilhafte Flexibilität der Gelenkwelle erreicht werden.

Des Weiteren wird vorgeschlagen, dass die weitere Nabe als eine weitere Profilnabe ausgebildet ist. Insbesondere ist die weitere Profilnabe als eine Keilnabe und/oder Zahnnabe ausgebildet, deren Innenprofil in Umfangsrichtung eine Vielzahl von Mitnehmern aufweist. Die Mitnehmer können insbesondere keilförmig, zahnförmig und/oder evolventenförmig ausgebildet sein. Hierdurch kann eine vorteilhafte Drehmomentübertragung zwischen der weiteren Nabe und dem Rohr erreicht werden.

Ferner wird vorgeschlagen, dass das Rohr ein zu einem weiteren Innenprofil der weiteren Profilnabe korrespondierendes weiteres Außenprofil aufweist, das zu einer Drehmomentübertragung zwischen dem Rohr und der weiteren Profilnabe vorgesehen ist. Insbesondere weist das weitere Außenprofil des Rohrs in Umfangsrichtung eine Vielzahl von Mitnehmern auf, welche zu Mitnehmern der weiteren Nabe korrespondierend ausgebildet sind. Insbesondere ist das weitere Außenprofil zumindest im Wesentlichen identisch zu dem Außenprofil. Hierdurch kann eine vorteilhafte Drehmomentübertragung zwischen der weiteren Nabe und dem Rohr erreicht werden. Ferner kann ein Längenausgleich vorteilhaft verlängert werden.

Zudem wird ein Antriebsstrang mit zumindest einer Gelenkwelle vorgeschlagen. Unter einem "Antriebstrang" soll in diesem Zusammenhang insbesondere eine Einheit verstanden werden, welche dazu vorgesehen ist, ein von zumindest einem Antriebsaggregat erzeugtes Drehmoment zu übertragen. Insbesondere weist der Antriebsstrang zumindest eine Gelenkwelle oder mehrere, insbesondere zu einem Gelenkwellenstrang verbundene, Gelenkwellen auf. Ferner kann der Antriebsstrang weitere Komponenten zur Drehmomentübertragung, beispielsweise eine oder mehrere Kupplungen, umfassen.

Ferner wird ein Verfahren zur Herstellung einer Gelenkwelle vorgeschlagen. Insbesondere wird in zumindest einem Verfahrensschritt ein Außenprofil in eine Wandung eines Rohrs eingebracht. In zumindest einem Verfahrensschritt wird eine Nabe, insbesondere eine Profilnabe, einstückig mit einem Kardangelenk verbunden. Unter "einstückig" soll insbesondere zumindest stoffschlüssig verbunden verstanden werden, beispielsweise durch einen Schweißprozess, einen Reibschweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. In zumindest einem Verfahrensschritt wird ein zu der Nabe korrespondierendes Außenprofil in eine Wandung des Rohrs eingebracht. In zumindest einem Verfahrensschritt wird das Rohr in die Nabe eingeschoben. Hierdurch kann ein Herstellungs- und/oder Montageaufwand vorteilhaft reduziert werden. Insbesondere kann eine Anzahl von notwendigen Schweißverbindungen vorteilhaft gering gehalten werden und/oder ein Wuchten der Gelenkwelle vorteilhaft entfallen.

Die erfindungsgemäße Gelenkwelle soll hierbei nicht auf die oben beschriebene Anwendung und Ausführungsform beschränkt sein. Insbesondere kann die erfindungsgemäße Gelenkwelle zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Teilschnittdarstellung einer Gelenkwelle mit einem Kardangelenk, mit einer mit dem Kardangelenk verbundenen Nabe und mit einem Rohr, welches ein zu einem Innenprofil der Nabe korrespondierendes Außenprofil aufweist, und
- Fig. 2: eine Teilschnittdarstellung einer alternativen Gelenkwelle mit zwei Kardangelenken, mit welchen jeweils eine Nabe verbunden ist und mit einem Rohr, welches ein zu Innenprofilen der Naben korrespondierendes Außenprofil aufweist.

### Beschreibung der Ausführungsbeispiele

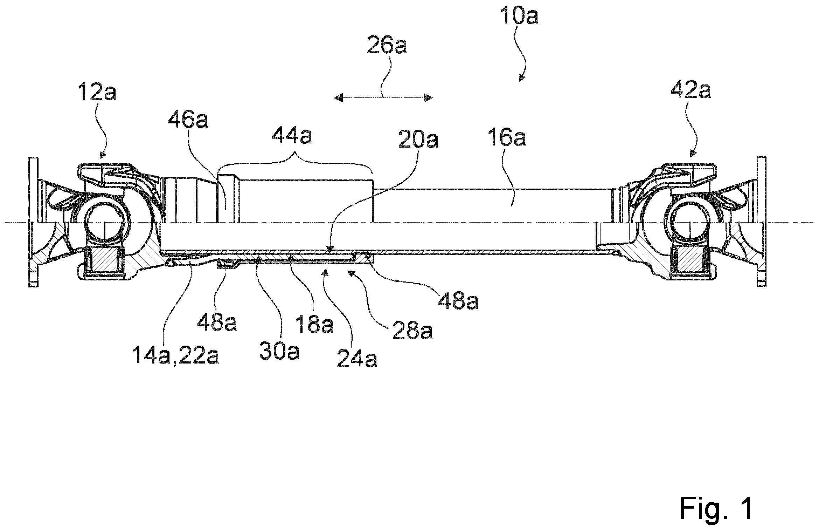

Figur 1 zeigt eine Teilschnittdarstellung einer Gelenkwelle 10a. Die Gelenkwelle 10a ist als eine Kardanwelle ausgebildet. Die Gelenkwelle 10a weist ein Kardangelenk 12a und eine mit dem Kardangelenk 12a, beispielsweise mittels einer Schweißverbindung, verbundenen Nabe 14a auf. Ferner weist die Gelenkwelle 10a ein Rohr 16a auf. Das Rohr 16a weist ein zu einem Innenprofil 18a der Nabe 14a korrespondierendes Außenprofil 20a auf, welches zu einer Drehmomentübertragung zwischen dem Rohr 16a und der Nabe 14a vorgesehen ist. Die Nabe 14a ist als eine Profilnabe 22a ausgebildet. Die Nabe 14a und das Rohr 16a sind mittels einer Passverzahnung 24a miteinander verbunden. Das Kardangelenk 12a und das Rohr 16a sind, insbesondere zu einem Längenausgleich, entlang einer Axialrichtung 26a relativ zueinander verschiebbar.

Des Weiteren weist die Gelenkwelle 10a einen Profilschutz 28a auf, welcher dazu vorgesehen ist, einen Bereich 30a zwischen dem Innenprofil 18a und dem Außenprofil 20a zu schützen. Der Profilschutz 28a ist an dem Rohr 16a angeordnet. Der Profilschutz 28a ist insbesondere dazu vorgesehen, ein Eindringen von Schmutz und/oder Feuchtigkeit in einen Verbindungsbereich 44a zwischen der Nabe 14a und dem Rohr 16a zu verhindern. Der Profilschutz 28a weist eine zumindest im Wesentlichen rohrförmige Dichthülse 46a auf, welche den Verbindungsbereich 44a zwischen der Nabe 14a und dem Rohr 16a in Umfangsrichtung vollständig umschließt. Ferner weist der Profilschutz 28a ringförmige Dichtelemente 48a auf, welche zwischen der Dichthülse 46a und der Nabe 14a und/oder dem Rohr 16a angeordnet sind. Der Profilschutz 28a ist unverschiebbar an dem Rohr 16a befestigt. Der Profilschutz 28a, insbesondere die Dichthülse 46a des Profilschutzes 28a, ist im Wesentlichen von einem Kunststoff gebildet.

An einem dem Kardangelenk 12a entgegensetzen Ende des Rohrs 16a weist die Gelenkwelle 10a ein zweites Kardangelenk 42a auf. Das zweite Kardangelenk 42a ist, beispielsweise mittels einer Schweißverbindung, unlösbar und unverschiebar mit dem Rohr 16a verbunden.

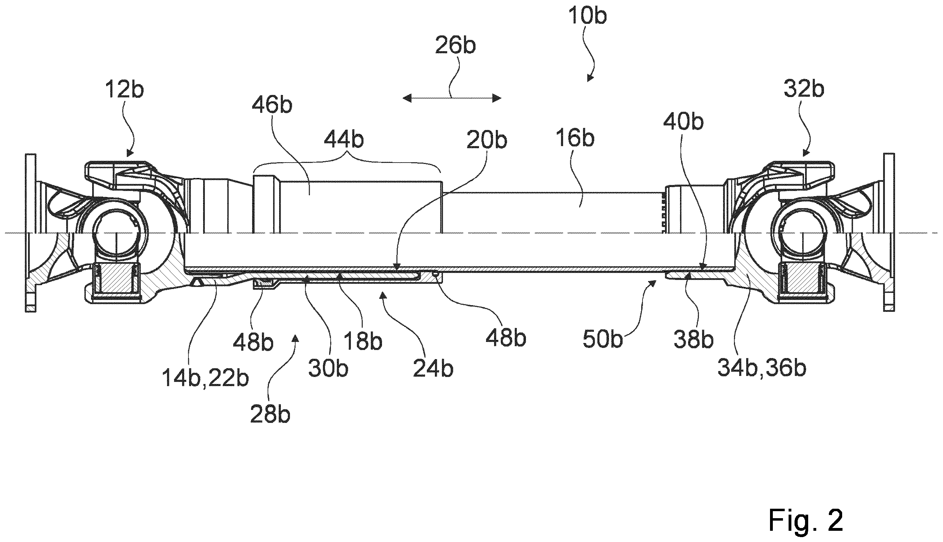

In Figuren 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels der Figur 1 verwiesen werden kann. Zur Unterscheidung der Ausführungsbeispiele ist der Buchstabe a den Bezugszeichen des Ausführungsbeispiels in der Figur 1 nachgestellt. In dem Ausführungsbeispiel der Figur 2 ist der Buchstabe a durch den Buchstaben b ersetzt.

Figur 2 zeigt eine Teilschnittdarstellung einer alternativen Gelenkwelle 10b. Die Gelenkwelle 10b ist als eine Kardanwelle ausgebildet. Die Gelenkwelle 10b weist ein Kardangelenk 12b und eine mit dem Kardangelenk 12b, beispielsweise mittels einer Schweißverbindung, verbundenen Nabe 14b auf. Ferner weist die Gelenkwelle 10b ein Rohr 16b auf. Das Rohr 16b weist ein zu einem Innenprofil 18b der Nabe 14b korrespondierendes Außenprofil 20b auf, welches zu einer Drehmomentübertragung zwischen dem Rohr 16b und der Nabe 14b vorgesehen ist. Die Nabe 14b ist als eine Profilnabe 22b ausgebildet. Die Nabe 14b und das Rohr 16b sind mittels einer Passverzahnung 24b miteinander verbunden. Das Kardangelenk 12b und das Rohr 16b sind, insbesondere zu einem Längenausgleich, entlang einer Axialrichtung 26b relativ zueinander verschiebbar.

Des Weiteren weist die Gelenkwelle 10b einen Profilschutz 28b auf, welcher dazu vorgesehen ist, einen Bereich 30b zwischen dem Innenprofil 18b und dem Außenprofil 20b zu schützen. Der Profilschutz 28b ist an dem Rohr 16b angeordnet. Der Profilschutz 28b ist insbesondere dazu vorgesehen, ein Eindringen von Schmutz und/oder Feuchtigkeit in einen Verbindungsbereich 44b zwischen der Nabe 14b und dem Rohr 16a zu verhindern. Der Profilschutz 28b weist eine zumindest im Wesentlichen rohrförmige Dichthülse 46b auf, welche den Verbindungsbereich 44b zwischen der Nabe 14b und dem Rohr 16b in Umfangsrichtung vollständig umschließt. Ferner weist der Profilschutz 28b ringförmige Dichtelemente 48b auf, welche zwischen der Dichthülse 46b und der Nabe 14b und/oder dem Rohr 16b angeordnet sind. Der Profilschutz 28b ist unverschiebbar an dem Rohr 16b befestigt. Der Profilschutz 28b, insbesondere die Dichthülse 46b des Profilschutzes 28b, ist im Wesentlichen von einem Kunststoff gebildet.

Die Gelenkwelle 10b weist ein weiteres Kardangelenk 32b, an welchem eine weitere Nabe 34b angeordnet ist, auf. Das weitere Kardangelenk 32b ist an einem dem Kardangelenk 12b entgegensetzen Ende des Rohrs 16b angeordnet. Das Rohr 16b weist ein zu einem weiteren Innenprofil 38b der weiteren Nabe 34b korrespondierendes weiteres Außenprofil 40b auf, welches zu einer Drehmomentübertragung zwischen dem Rohr 16b und der weiteren Nabe 34b vorgesehen ist. Die weitere Nabe 34b ist als eine weitere Profilnabe 36b ausgebildet. Die weitere Nabe 34b und das Rohr 16b sind mittels einer weiteren Passverzahnung 50b miteinander verbunden. Um eine Verlängerung eines Längenausgleichs zu erreichen, kann eine weitere Nabe alternativ zumindest weitgehend identisch zu der Nabe 14b ausgebildet sein.

## Patentansprüche

1. Gelenkwelle, insbesondere Kardanwelle, mit zumindest einem Kardangelenk (12a; 12b), mit zumindest einer mit dem Kardangelenk (12a; 12b) verbundenen Nabe (14a; 14b), mit zumindest einem Rohr (16a; 16b), welches ein zu einem Innenprofil (18a; 18b) der Nabe (14a; 14b) korrespondierendes Außenprofil (20a; 20b) aufweist, das zu einer Drehmomentübertragung zwischen dem Rohr (16a; 16b) und der Nabe (14a; 14b) vorgesehen ist, und mit zumindest einem Profilschutz (28a; 28b), welcher dazu vorgesehen ist, einen Bereich (30a; 30b) zwischen dem Innenprofil (18a; 18b) und dem Außenprofil (20a; 20b) zu schützen, und welcher an dem Rohr (16a; 16b) angeordnet ist, wobei der Profilschutz (28a; 28b) eine zumindest im Wesentlichen rohrförmige Dichthülse (46a; 46b) aufweist, welche dazu vorgesehen ist, zumindest einen Verbindungsbereich (44a; 44b) zwischen der Nabe (14a; 14b) und dem Rohr (16a; 16b) in Umfangsrichtung vollständig zu umschließen, **dadurch gekennzeichnet, dass** der Profilschutz (28a; 28b) ringförmige Dichtelemente (48a; 48b) aufweist, welche zwischen der Dichthülse (46a; 46b) und der Nabe (14a; 14b) und zwischen der Dichthülse und dem Rohr (16a; 16b) angeordnet sind.

2. Gelenkwelle nach Anspruch 1, **dadurch gekennzeichnet, dass** die Nabe (14a; 14b) als eine Profilnabe (22a; 22b) ausgebildet ist.

3. Gelenkwelle nach Anspruch 1 oder 2, **dadurch gekennzeichnet, dass** die Nabe (14a; 14b) und das Rohr (16a; 16b) mittels einer Passverzahnung (24a; 24b) miteinander verbunden sind.

4. Gelenkwelle nach einem der vorhergehenden Ansprüche, **dadurch gekennzeichnet, dass** das Kardangelenk (12a; 12b) und das Rohr (16a; 16b) entlang einer Axialrichtung (26a; 26b) relativ zueinander verschiebbar sind.

5. Gelenkwelle nach einem der vorhergehenden Ansprüche, **dadurch gekennzeichnet, dass** der Profilschutz (28a; 28b) zumindest im Wesentlichen von einem Kunststoff gebildet ist.

6. Gelenkwelle nach einem der vorhergehenden Ansprüche, **gekennzeichnet durch** ein weiteres Kardangelenk (32b), an welchem eine weitere Nabe (34b) angeordnet ist.

7. Gelenkwelle nach Anspruch 6, **dadurch gekennzeichnet, dass** die weitere Nabe (34b) als eine weitere Profilnabe (36b) ausgebildet ist.

8. Gelenkwelle nach Anspruch 6 oder 7, **dadurch gekennzeichnet, dass** das Rohr (16b) ein zu einem weiteren Innenprofil (38b) der weiteren Nabe (34b) korrespondierendes weiteres Außenprofil (40b) aufweist, das zu einer Drehmomentübertragung zwischen dem Rohr (16b) und der weiteren Nabe (34b) vorgesehen ist.

9. Antriebsstrang mit zumindest einer Gelenkwelle (10a; 10b) nach einem der vorhergehenden Ansprüche.

## Claims

1. Articulate shaft, in particular cardan shaft, with at least one cardan joint (12a; 12b), with at least one hub (14a; 14b) that is connected to the cardan joint (12a; 12b), with at least one tube (16a; 16b) having an exterior profile (20a; 20b) which corresponds to an interior profile (18a; 18b) of the hub (14a; 14b) and is configured for a torque transmission between the tube (16a; 16b) and the hub (14a; 14b), and with at least one profile protection (28a; 28b) which is configured to protect a region (30a; 30b) between the interior profile (18a; 18b) and the exterior profile (20a; 20b) and which is arranged on the tube (16a; 16b),
the profile protection (28a; 28b) comprising an at least substantially tube-shaped sealing sleeve (46a; 46b) which is configured to encompass at least a connection region (44a; 44b) between the hub (14a; 14b) and the tube (16a; 16b) completely in a circumferential direction,
**characterised in that** the profile protection (28a; 28b) comprises ring-shaped sealing elements (48a; 48b), which are arranged between the sealing sleeve (46a; 46b) and the hub (14a; 14b) and between the sealing sleeve and the tube (16a; 16b).

2. Articulate shaft according to claim 1,
**characterised in that** hub (14a; 14b) is embodied as a profiled hub (22a; 22b)

3. Articulate shaft according to claim 1 or 2,
**characterised in that** the hub (14a; 14b) and the tube (16a; 16b) are connected to each other via a spline toothing (24a; 24b).

4. Articulate shaft according to one of the preceding claims,
**characterised in that** the cardan joint (12a; 12b) and the tube (16a; 16b) are displaceable relative to each other along an axial direction (26a; 26b).

5. Articulate shaft according to one of the preceding claims,
**characterised in that** the profile protection (28a; 28b) is implemented at least substantially of a synthetic material.

6. Articulate shaft according to one of the preceding claims,
**characterised by** a further cardan joint (32b), on which a further hub (34b) is arranged.

7. Articulate shaft according to claim 6,
**characterised in that** the further hub (34b) is embodied as a further profiled hub (36b).

8. Articulate shaft according to claim 6 or 7,
**characterised in that** the tube (16b) comprises a further exterior profile (40b) which corresponds to a further interior profile (38b) of the further hub (34b) and is configured for a torque transmission between the tube (16b) and the further hub (34b).

9. Power chain with at least one articulate shaft (10a; 10b) according to one of the preceding claims.

## Revendications

1. Arbre articulé, en particulier arbre à cardan, avec au moins un joint de cardan (12a ; 12b), avec au moins un moyeu (14a ; 14b) raccordé au joint de cardan (12a ; 12b), avec au moins un tube (16a ; 16b) comportant au moins un profil extérieur (20a ; 20b) qui corresponde à un profil intérieur (18a ; 18b) du moyeu (14a ; 14b) et qui est configuré pour une transmission de couple entre le tube (16a ; 16b) et le moyeu (14a ; 14b), et avec au moins une protection de profil (28a ; 28b) qui est prévue à protéger une zone (30a ; 30b) entre le profil intérieur (18a ; 18b) et le profil extérieur (20a ; 20b) et qui est disposée sur le tube (16a ; 16b) ;
la protection de profil (28a ; 28b) comprenant une douille d'étanchéité (46a ; 46b) qui est au moins sensiblement en forme de tube et est configurée pour entourer au moins une zone de raccordement (44a ; 44b) entre le moyeu (14a ; 14b) et le tube (16a ; 16b) complètement en direction circonférentielle,
**caractérisé en ce que** la protection de profil (28a ; 28b) comporte des éléments d'étanchéité en forme d'anneau (48a ; 48b) disposés entre la douille d'étanchéité (46a ; 46b) et le moyeu (14a ; 14b) et entre la douille d'étanchéité (46a ; 46b) et le tube (16a ; 16b).

2. Arbre articulé selon la revendication 1,
**caractérisé en ce que** le moyeu (14a ; 14b) est réalisé comme moyeu profilé (22a ; 22b).

3. Arbre articulé selon la revendication 1 ou 2,
**caractérisé en ce que** le moyeu (14a ; 14b) et le tube (16a ; 16b) sont raccordés l'un à l'autre par le biais d'un engrenage d'emboîtement (24a ; 24b).

4. Arbre articulé selon l'une des revendications précédentes,
**caractérisé en ce que** le joint de cardan (12a ; 12b) et le tube (16a ; 16b) sont déplaçables l'un par rapport à l'autre le long d'une direction axiale (26a ; 26b).

5. Arbre articulé selon l'une des revendications précédentes,
**caractérisé en ce que** la protection de profil (28a ; 28b) est formée au moins sensiblement d'un matériau synthétique.

6. Arbre articulé selon l'une des revendications précédentes,
**caractérisé par** un joint de cardan de plus (32b) auquel est disposé un moyeu de plus (34b).

7. Arbre articulé selon la revendication 6,
**caractérisé en ce que** le moyeu de plus (34b) est réalisé comme moyeu profilé de plus (36b).

8. Arbre articulé selon la revendication 6 ou 7,
**caractérisé en ce que** le tube (16b) comporte un profil extérieur de plus (40b) qui corresponde à un profil intérieur de plus (38b) du moyeu de plus (34b) et qui est configuré pour une transmission de couple entre le tube (16b) et le moyeu de plus (34b).

9. Chaîne cinématique avec au moins un arbre articulé selon l'une des revendications précédentes.
